# EUROPÄISCHE PATENTSCHRIFT

(11) **EP 2 793 649 B1**
(45) Veröffentlichungstag und Bekanntmachung des Hinweises auf die Patenterteilung: **27.05.2015**
(21) Anmeldenummer: 11804500.4
(22) Anmeldetag: 22.12.2011
(51) Int. Cl.: A47B 13/02, A47B 17/00

(54) **SCHWINGUNGSGEDÄMPFTES MÖBEL IN DER FORM EINES TISCHES**
VIBRATION-DAMPED FURNITURE PIECE IN THE FORM OF A TABLE
MEUBLE AVEC AMORTISSEMENT DES VIBRATIONS SOUS LA FORME D'UNE TABLE

(43) Veröffentlichungstag der Anmeldung: 29.10.2014
(73) Patentinhaber: Steelcase Werndl AG, 83026 Rosenheim (DE)
(72) Erfinder: WIDHOLZER, Georg, 83112 Frasdorf (DE); WIDHOLZER, Josef, 83112 Frasdorf (DE)
(74) Vertreter: Bauer, Friedrich
(86) Internationale Anmeldenummer: PCT/EP2011/006532
(87) Internationale Veröffentlichungsnummer: WO 2013/091671

(56) Entgegenhaltungen:
- WO-A1-2008/046906

## Beschreibung

Die vorliegende Erfindung betrifft ein Möbel in Form eines Tisches gemäß dem Oberbegriff von Anspruch 1.

WO 2008/046906 A1 offenbart die Merkmale des Oberbegriffs des Anspruchs 1.

Aus dem Stand der Technik bekannte Tische weisen im Allgemeinen ein Tischgestell mit zwei zueinander beabstandeten Tischbeinstrukturen auf, die mittels einer üblicherweise direkt unterhalb einer Tischplatte angeordneten Verbindungsstrebe miteinander verbunden sind. Jede Tischbeinstruktur weist üblicherweise an ihrem oberen Ende eine Befestigungskonsole auf, an der die Verbindungsstrebe starr befestigt ist.

Ein Tisch mit einem derartigen Tischgestell weist das Problem auf, dass eine einmal ausgelöste Schwingung, die insbesondere durch ein seitliches Anstoßen einer Person an den Tisch oder eine andere laterale Krafteinbringung ausgelöst wird, für eine relativ lange Zeit andauert. Solche störenden lateralen Schwingungen stellen insbesondere bei Tischen mit langen Beinen, beispielsweise bei höhenverstellbaren Tischen mit ausfahrbaren Tischbeinen, ein Problem dar, da dort das Abklingen der Schwingungen besonders lange dauert.

Der Erfindung liegt die Aufgabe zugrunde, ein Möbel der eingangs genannten Art zu schaffen, bei dem seitliche Schwingungen, nachdem sie ausgelöst worden sind, schnell wieder abklingen.

Diese Aufgabe wird durch ein Möbel mit den Merkmalen des Anspruchs 1 gelöst. Vorteilhafte Ausgestaltungen sind in den Unteransprüchen beschrieben.

Erfindüngsgemäß weist das Tischgestell eine zwischen der Verbindungstrebe und mindestens einer Befestigungskonsole wirkende Schwingungsdämpfungseinrichtung zur Dämpfung von seitlichen Schwingungen des Möbels auf. Lateralschwingungen klingen hierdurch wesentlich schneller als ohne einer derartigen Schwingungsdämpfungseinrichtung ab.

Vorzugsweise ist die Verbindungsstrebe an zumindest einer Befestigungskonsole mittels mindestens eines elastisch nachgiebigen Schwingungsdämpfungselementes befestigbar. Bei Ausübung einer lateralen Kraft und der resultierenden lateralen Schwingungsbewegung des Möbels verändert sich der Winkel zwischen der Verbindungsstrebe und den jeweiligen Tischbeinstrukturen, wodurch das Schwingungsdämpfungselement elastisch verformt wird. Aufgrund der elastischen Verformung des Schwingungsdämpfungselementes kann die Schwingung des Möbels effektiv gedämpft werden, so dass die Schwingungsamplituden des Möbels schnell reduziert und die Schwingungsdauer verkürzt werden.

Vorzugsweise hat das Schwingungsdämpfungselement die Form einer elastischen Manschette, die sich zumindest über den überwiegenden Teil des Überlappungsbereichs von Befestigungskonsole und Verbindungsstrebe über den Endbereich der Verbindungsstrebe erstreckt. Mit anderen Worten umgibt zumindest eine Manschette zumindest einen Endbereich der Verbindungsstrebe. Alternativ könnten auch separate elastische Matten, Kissen oder elastische Beläge im Endbereich der Verbindungstrebe zwischen Verbindungsstrebe und Befestigungskonsole vorgesehen sein.

Eine Ausgestaltung des Schwingungsdämpfungselementes als Manschette ist konstruktiv besonders einfach und kostengünstig sowie einfach zu montieren. Vorzugsweise wird das Schwingungsdämpfungselement allein durch Klemmung zwischen Befestigungskonsole und Verbindungsstrebe gehalten.

Alternativ kann auch eine Verbindungsstrebe vorgesehen sein, deren Endbereiche aus einem elastisch verformbaren Material bestehen, wobei dann die Endbereiche die Schwingungsdämpfungselemente bilden.

In einer weiteren bevorzugten Ausführungsform ist die Verbindungsstrebe an zumindest einem ihrer Endbereiche mit der Befestigungskonsole mittels eines ersten und eines zweiten Befestigungsmittels befestigbar. Das erste Befestigungsmittel ist dabei in Längsrichtung der Verbindungsstrebe weiter außen angeordnet, wohingegen das zweite Befestigungsmittel weiter innen angeordnet und über das Schwingungsdämpfungselement an der Befestigungskonsole befestigbar ist.

Vorzugsweise umfasst das Schwingungsdämpfungselement ein Elastomerelement und ein Befestigungselement, wobei das Befestigungselement am Elastomerelement und dieses an der Befestigungskonsole anliegt. Die Verbindungsstrebe ist mittels des zweiten Befestigungsmittels, beispielsweise mittels einer Schraube, mit dem Befestigungselement verbindbar. Vorzugsweise ist dabei das Befestigungselement an einer Seitenwandinnenseite der Befestigungskonsole angeordnet, wobei das Elastomerelement zwischen dem Befestigungselement und der Seitenwandinnenseite der Befestigungskonsole angeordnet ist. Die Verbindungsstrebe kann dabei auf die Befestigungskonsole aufgesteckt sein. Das zweite Befestigungsmittel ist zweckmäßigerweise von außen durch die Seitenwand der Verbindungsstrebe als auch mit seitlichem Spiel durch eine seitliche Öffnung der Befestigungskonsole hindurchgeführt und mit dem Befestigungselement verbunden, wodurch die Verbindungsstrebe in diesem Bereich elastisch an der Befestigungskonsole festgeklemmt wird.

Bei einer entsprechenden Ausgestaltung des erfindungsgemäßen Möbels kann die Verbindungsstrebe in ihren jeweiligen Endbereichen einfach über die jeweiligen Befestigungskonsolen geschoben werden, so dass die Befestigungskonsolen in der Verbindungsstrebe aufgenommen sind. Dies ermöglicht eine einfache und schnelle Montage des Tischgestells. Weiterhin sind bei einem entsprechenden Aufbau des Tisches die Befestigungskonsolen im montierten Zustand nicht sichtbar.

Vorzugsweise weist das Befestigungselement einen Abstandshalter auf, der durch eine Öffnung der Seitenwand der Befestigungskonsole hindurchgeführt und über eine Seitenwandaußenseite der Befestigungskonsole vorsteht. Der Abstandshalter liegt dann von innen an einer Seitenwand der über die Befestigungskonsole geschobenen Verbindungsstrebe an. Dadurch ist gewährleistet, dass bei der Befestigung der Verbindungsstrebe an der Befestigungskonsole die Verbindungsstrebe im Bereich des zweiten Befestigungsmittels ein gewisses Spiel zur Befestigungskonsole einhält, wodurch in diesem Bereich die gewünschte, durch das Elastomerelement gedämpfte Relativbewegung zwischen Verbindungsstrebe und Befestigungskonsole ermöglicht wird.

Alternativ zu der dargestellten Ausführung der Schwingungsdämpfungselemente können diese auch in Form von Silentblocks realisiert sein, die jeweils zwischen der Befestigungskonsole und der Verbindungsstrebe angeordnet sind.

Die Erfindung wird nachfolgend anhand von Ausführungsbeispielen weiter erläutert. Dabei zeigen im Einzelnen:
- Figur 1:: eine perspektive Darstellung eines erfindungsgemäßen Tisches gemäß einer ersten Ausführungsform der Erfindung;
- Figur 2:: eine vergrößerte perspektivische Darstellung des in Figur 1 dargestellten Tisches, wobei lediglich eine mit einer Verbindungsstrebe verbundene Tischbeinstruktur dargestellt ist;
- Figur 3:: eine perspektivische Explosionszeichnung des in den Figuren 1 und 2 dargestellten Tisches im Verbindungsbereich zwischen der Verbindungsstrebe und einer Befestigungskonsole;
- Figur 4:: eine perspektivische Darstellung der Bauelemente von Figur 3 im zusammengebauten Zustand ohne Befestigungskonsblen-Oberschale;
- Figur 5:: eine Darstellung entsprechend Figur 4 mit montierter Befestigungskonsolen-Oberschale;
- Figur 6:: eine perspektive Darstellung eines Tischgestells gemäß einer zweiten Ausführungsform der Erfindung;
- Figur 7:: eine perspektivische Explosionszeichnung des erfindungsgemäßen Möbels gemäß der zweiten Ausführungsform im Verbindungsbereich der Befestigungskonsole;
- Figur 8:: eine perspektivische Darstellung einiger wesentlicher Bauelemente von Figur 7 im montierten Zustand ohne Verbindungsstrebe; und
- Figur 9:: der in Figur 8 dargestellte Ausschnitt mit einer mit der Befestigungskonsole verbundenen Verbindungsstrebe.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt und eine wiederholende Beschreibung vermieden wird.

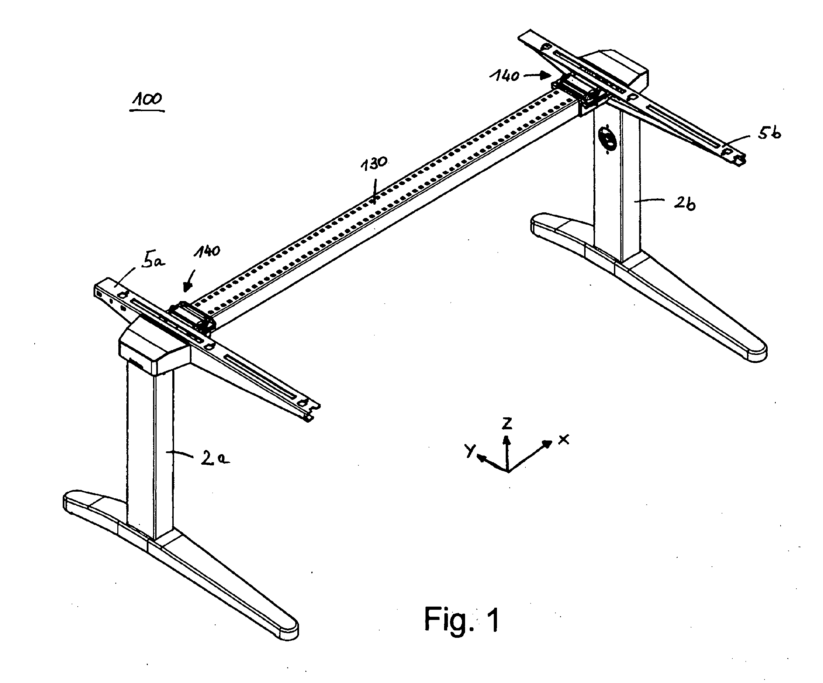

Figur 1 zeigt eine perspektivische Darstellung eines Tischgestells 100 eines Möbels in der Form eines Tisches gemäß einer ersten Ausführungsform der vorliegenden Erfindung. Die Tischplatte des Möbels ist der Übersichtlichkeit halber weggelassen worden. Das Tischgestell 100 umfasst zwei zueinander beabstandete Tischbeinstrukturen 2a, 2b, die jeweils ein Tischbein und einen Tischfuß umfassen. Die an beiden Seiten des Tischgestells 100 angeordneten Tischbeinstrukturen 2a, 2b sind mit einer Verbindungsstrebe 130 miteinander verbunden. Die beiden Tischbeinstrukturen 2a, 2b weisen jeweils eine Befestigungskonsole 140 auf, mit denen jeweils die Endbereiche der Verbindungsstrebe 130 verbunden sind. Zwischen den jeweiligen Befestigungskonsolen 140 und den Tischbeinen der Tischbeinstrukturen 2a, 2b ist jeweils eine Tischplattenbefestigungsstrebe 5a, 5b vorgesehen, mit der eine Tischplatte beispielsweise über Schrauben verbunden werden kann. Das Tischgestell 100 weist eine sich in X-Richtung bzw. in die laterale Richtung erstreckende Breite, eine sich in Y-Richtung erstreckende Tiefe und eine sich in Z-Richtung erstreckende Höhe auf.

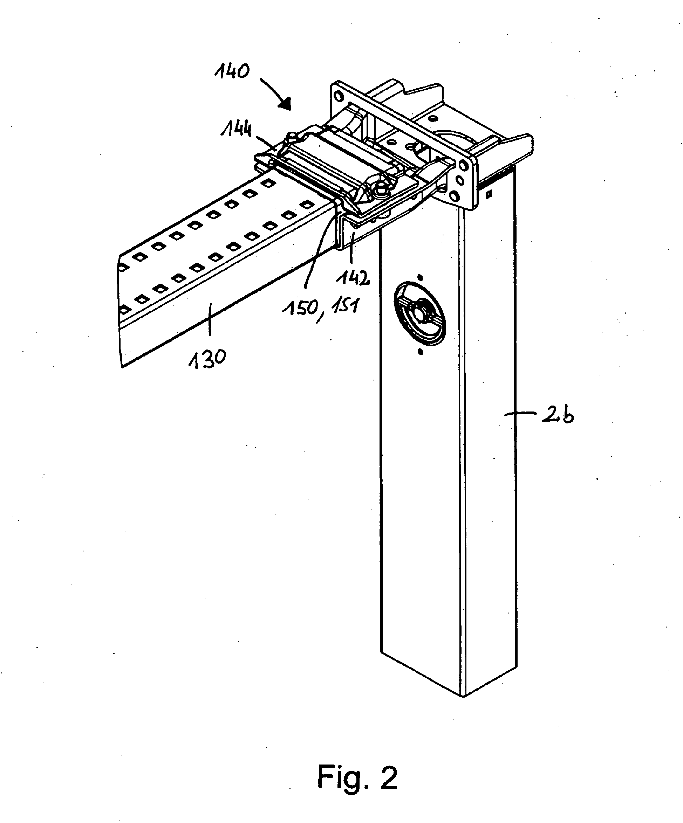

Figur 2 zeigt eine vergrößerte perspektische Darstellung des in Figur 1 dargestellten Tischgestells 100, wobei lediglich die mit der Verbindungsstrebe 130 über die Befestigungskonsole 140 verbundene Tischbeinstruktur 2b dargestellt ist. Die Tischbeinstruktur 2a ist in entsprechender Weise mit der Verbindungsstrebe 130 verbunden.

Aus Figur 2 ist ersichtlich, dass die Verbindungsstrebe 130 endseitig mittels eines Schwingungsdämpfungselements 150 an der Befestigungskonsole 140 befestigt ist. Das Schwingungsdämpfungselement 150 ist folglich an einem Endbereich der Verbindungsstrebe 130 angeordnet. Weiterhin ist aus Figur 2 zu ersehen, dass das Schwingungsdämpfungselement 150 zwischen der Befestigungskonsole 140 und der Verbindungsstrebe 130 angeordnet ist. Das Schwingungdämpfungselement 150 bildet eine Schwingungsdämpfungseinrichtung zur Dämpfung von Lateralschwingungen des Möbels.

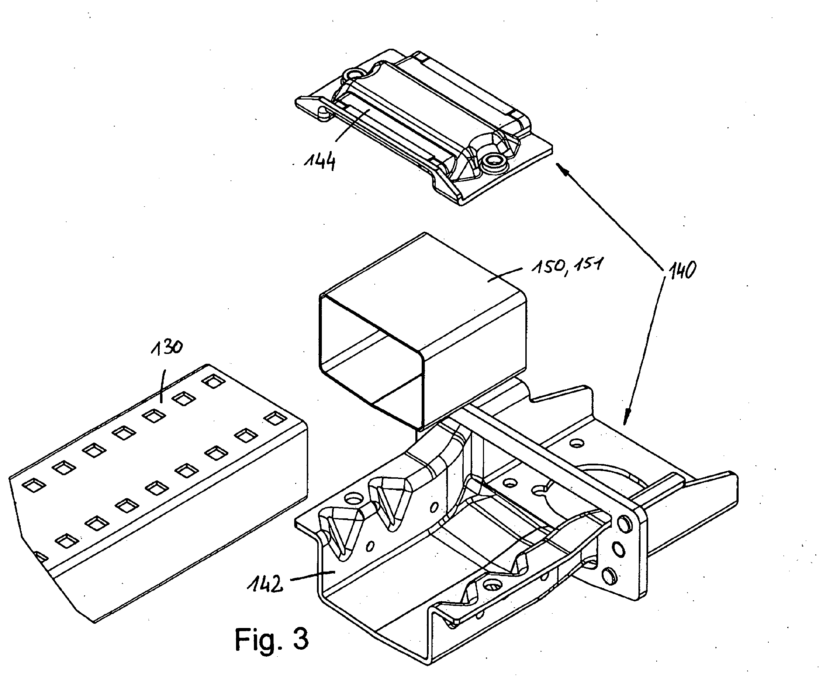

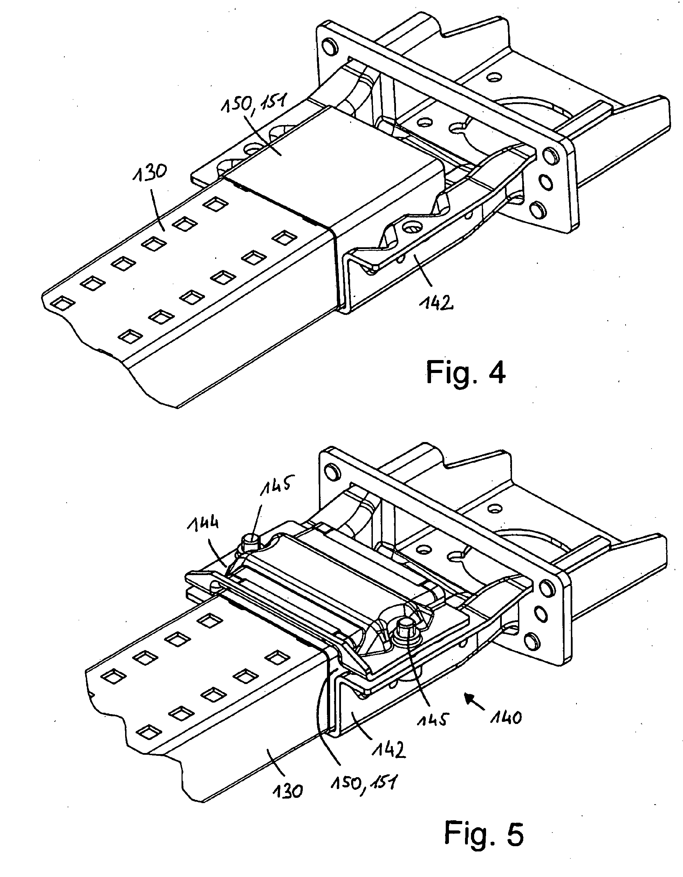

Figur 3 zeigt eine perspektivische Explosionszeichnung des in Figur 2 dargestellten Ausschnitts, wobei lediglich die Verbindungsstrebe 130, eine Befestigungskonsole 140 und das Schwingungsdämpfungselement 150 dargestellt sind. Die Befestigungskonsole 140 umfasst eine Unterschale 142 und eine Oberschale 144, die mittels einer Schraubverbindung miteinander verbunden werden können. Figur 4 zeigt eine perspektivische Darstellung der zusammengebauten Bauelemente von Figur 3 ohne Oberschale 144, und Figur 5 zeigt die Baugruppe von Figur 4 mit montierter Oberschale 144.

Aus den Figuren ist ersichtlich, dass das Schwingungsdämpfungselement 150 die Form einer Manschette 151 aufweist. Die Manschette 151 kann über den Endbereich der Verbindungsstrebe 130 gestülpt bzw. gezogen werden. Dabei besteht die Manschette 151 aus einem elastisch verformbaren Material, beispielsweise Gummi oder einem gummi- oder schaumstoffartigen Material.

Alternativ kann das Schwingungsdämpfungselement 150 auch als elastomere Matte gestaltet sein, die um den Endbereich der Verbindungsstrebe 130 herumgewickelt wird, so dass zwei Endseiten der Matte bei einer Umwicklung des Endbereichs der Verbindungsstrebe 130 auf Stoß liegen. Weiterhin könnten auch voneinander getrennte, ebene Mattenelemente an den einzelnen Seiten der Verbindungsstrebe 130 vorgesehen sein.

Figur 4 zeigt, dass die Manschette 151 den gesamten Endbereich der Verbindungsstrebe 130 überdeckt, in dem sich die Verbindungsstrebe 130 und die Befestigungskonsole 140 überlappen.

Figur 5 zeigt, dass die Manschette 151 zwischen dem Endbereich der Verbindungsstrebe 130 und der Unterschale 142 und der Oberschale 144 der Befestigungskonsole 140 eingeklemmt ist, indem die Oberschale 144 mittels Schrauben 145 an der Unterschale 142 befestigt ist. Somit ist die Verbindungsstrebe 130 von der Befestigungskonsole 140 mittels der Manschette 151 elastisch getrennt.

Bei einer Kraftausübung in X-Richtung (Figur 1) und bei den hierdurch ausgelösten Lateralschwingungen des Tisches verändert sich laufend der Winkel, der üblicherweise, 90° beträgt, zwischen der Verbindungsstrebe 130 und den Tischbeinstrukturen 2a und 2b. Dabei werden in den Überlappungsbereichen zwischen Befestigungskonsolen 140 und Verbindungsstrebe 130 wechselnde Biegekräfte in Z-Richtung wirksam, welche die Manschette 151 verformen. Da die Manschette 151 aus einem elastisch verformbaren Material besteht, wirkt die Manschette 151 der Schwingung entgegen, so dass die Schwingungsdauer des Tisches nach einer lateralen Krafteinwirkung in X-Richtung reduziert wird und der Tisch wieder früher in die Ruhestellung übergeht.

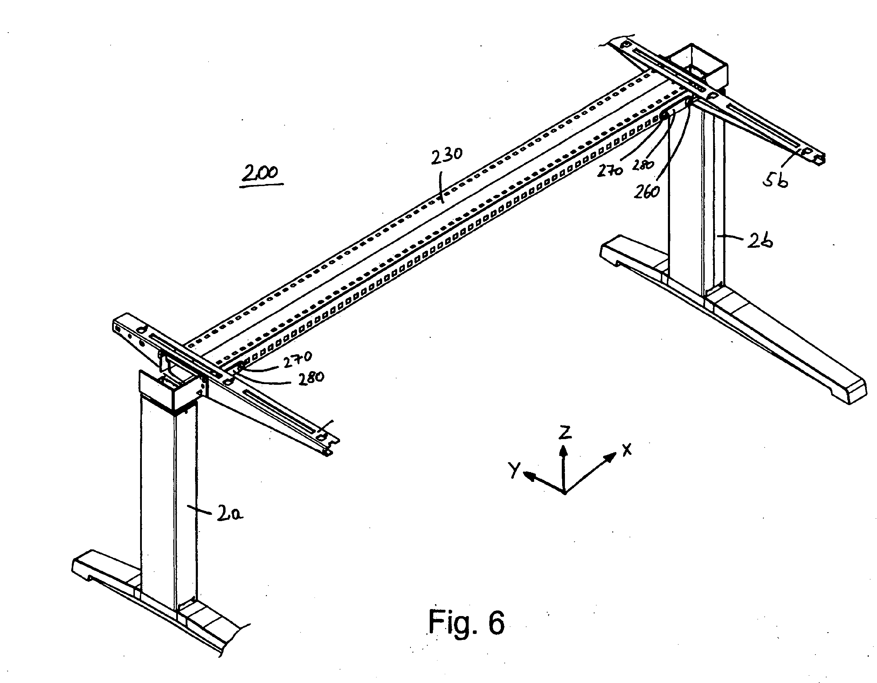

Figur 6 zeigt eine perspektivische Darstellung eines Tischgestells 200 eines erfindungsgemäßen Möbels in Form eines Tisches gemäß einer zweiten Ausführungsform der Erfindung. Das in Figur 6 dargestellte Tischgestell 200 ähnelt dem in Figur 1 dargestellten Tischgestell 200, wobei bei dem Tischgestell 200 gemäß der zweiten Ausführungsform die in Figur 6 nicht zu sehenden Verbindungskonsolen 240 in einem Innenraum in den Endbereichen der Verbindungsstrebe 230 aufgenommen sind. Die Tischplattenbefestigungsstreben 5a, 5b sind mittels Schraubverbindungen mit den jeweiligen Befestigungskonsolen 240 verbunden.

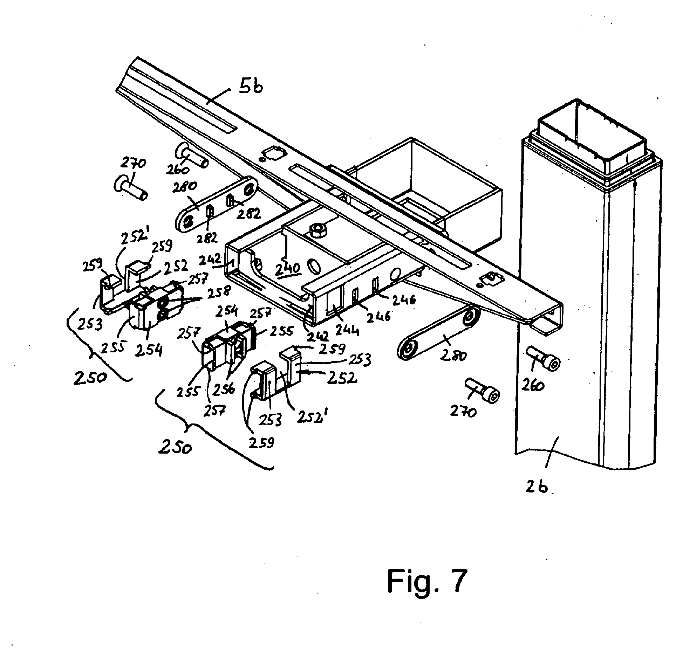

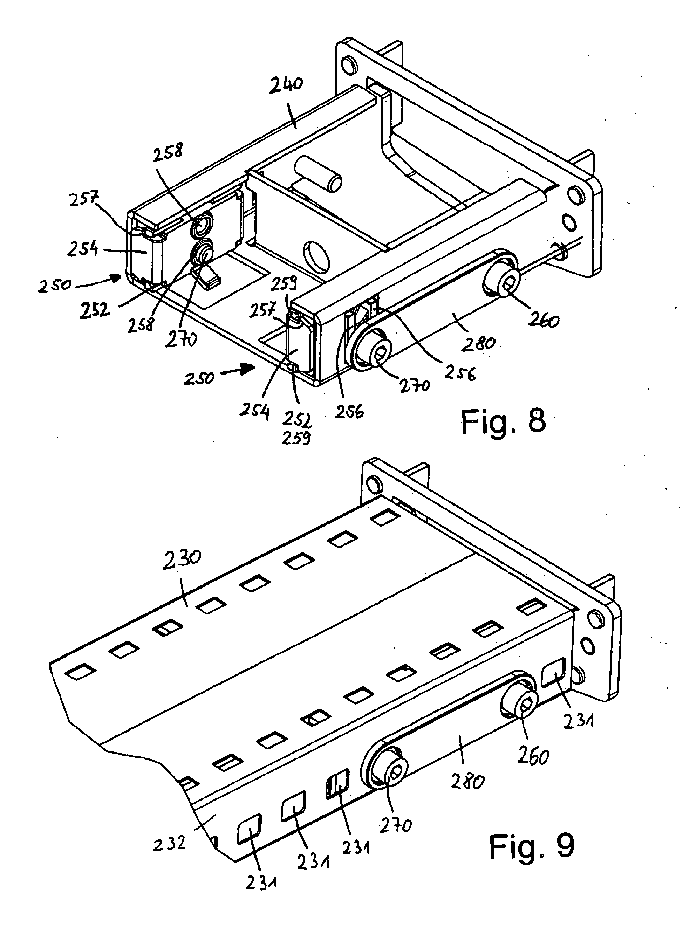

Aus Figur 7, die eine perspektivische Explosionszeichnung des Tischgestells 200 gemäß der zweiten Ausführungsform im Verbindungsbereich einer Befestigungskonsole 240 zeigt, ist der Aufbau der Befestigungskonsole 240 samt Schwingungsdämpfungselementen 250 zu ersehen. Figur 8 zeigt eine, perspektivische Darstellung der Befestigungskonsole 240 von Figur 7 mit montierten Schwingungsdämpfungselementen 250, und Figur 9 zeigt die in Figur 8 dargestellten Bauteile, wobei die Verbindungsstrebe 230 über die Befestigungskonsole 240 geschoben und mit dieser verbunden ist.

Die Schwingungsdämpfungselemente 250 umfassen jeweils ein Elastomerelement 252 und ein mit dem Elastomerelement 252 verbindbares Befestigungselement 254. Das Elastomerelement 252 besteht aus einem elastisch nachgiebigen Material, beispielsweise Gummi oder einem gummiartigen Material. Das Befestigungselement 254 wiederum besteht aus einem harten Kunststoff oder aus einem Metall, beispielsweise Aluminium oder Stahl. Die Schwingungsdämpfungselemente 250 bilden eine Schwingungsdämpfungseinrichtung zur Dämpfung von Lateralschwingungen des Möbels.

Das Elastomerelement 252 weist erste Verbindungseinrichtungen 253 in der Form von abgewinkelten Laschen auf, welche das Befestigungselement 254 teilweise über- und untergreifen und verrastbar auf das Befestigungselement 254 aufsteckbar sind. Die Verrastung erfolgt mittels randseitiger Vorsprünge 259, welche randseitige Vorsprünge 257, die eine zweite Verbindungseinrichtung 255 bilden, hintergreifen. Die zweite Verbindungseinrichtung 255 kann damit in die erste Verbindungseinrichtung 253 eingreifen, so dass das Elastomerelement 252 mit dem Befestigungselement 254 über eine Schnappverbindung miteinander verbunden werden können.

Das Befestigungselement 254 weist ferner einen Abstandshalter 256 in Form von zwei Stegen auf, die im montierten Zustand durch eine Ausnehmung 252' des Elastomerelements 252 hindurch ragen. Weiterhin weist jedes Befestigungselement 254 jeweils zwei Gewindehülsen 258 auf, in die eine Befestigungsschraube 270 eingeschraubt werden kann.

Die so aufgebauten und zusammengesetzten Schwingungsdämpfungselemente 250 sind an Seitenwandinnenseiten 242 der Befestigungskonsole angeordnet (s. Figur 8). Dabei befindet sich das Elastomerelement 252 zwischen dem Befestigungselement 254 und der Seitenwandinnenseite 242 der Befestigungskonsole 240. Der Abstandshalter 256 ist mit seitlichem Spiel durch eine seitliche Öffnung 244 der Befestigungskonsole 240 hindurch geführt und ragt aus der seitlichen Öffnung 244 und somit aus der Befestigungskonsole 240 heraus.

Wie aus Figur 9 ersichtlich, ist die Verbindungsstrebe 230 auf die Befestigungskonsole 240 aufgesteckt, so dass die Befestigungskonsole 240 im montierten Zustand des Tisches 200 in einem Innenraum des Endbereichs der Verbindungsstrebe 230 angeordnet ist. Die Verbindungsstrebe 230 ist in ihren jeweiligen Endbereichen mit einem in Längsrichtung der Verbindungsstrebe 230 weiter außen angeordneten ersten Befestigungsmittel in Form einer Befestigungsschraube 260 und einem weiter innen angeordneten zweiten Befestigungsmittel in Form der Befestigungsschraube 270 an der Befestigungskonsole 240 befestigt. Dabei ist die zweite Befestigungsschraube 270 nicht direkt mit der Befestigungskonsole 240, sondern mit dem Befestigungselement 254 des Schwingungsdämpfungselements 250 verbunden, indem die Befestigungsschraube 270 in die Innengewindehülse 258 eingeschraubt ist. Die zweite Befestigungsschraube 270 ist dabei mit seitlichem Spiel sowohl durch eine seitliche Öffnung 231 der Verbindungsstrebe 230 als auch durch die weitere seitliche Öffnung 244 der Befestigungskonsole 240 hindurch geführt.

Der Abstandshalter 256 der Befestigungselemente 254 ist jeweils mit seitlichem Spiel durch die seitlichen Öffnungen 244 der Befestigungskonsole 240 hindurch geführt und ragt seitlich etwas über die Befestigungskonsole 240 vor. Der Abstandshalter 256 liegt dann im montierten Zustand von innen an einer Seitenwand 232 der Verbindungsstrebe 230 an. Die erste Befestigungsschraube 260 und die zweite Befestigungsschraube 270 sind an der Seitenwand 232 der Verbindungsstrebe 230 mittels einer Befestigungslasche 280 miteinander verbunden. Die Befestigungslasche 280 weist der Befestigungskonsole 240 zugewandt zwei Positionierungsstifte 282 auf, die in einem montierten Zustand sowohl durch seitliche Öffnungen 231 der Verbindungsstrebe 230 als auch durch Positionierungsöffnungen 246 der Befestigungskonsole 240 ragen. Die Positionierungsstifte 282 und die Positionierungsöffnungen 246 der Befestigungskonsole 240 dienen somit einer vereinfachten Montage.

Bei einer lateralen Kraftausübung in X-Richtung des Tisches 200 (s. Figur 6) verändert sich die Winkel zwischen der Verbindungsstrebe 230 und den Tischbeinstrukturen 2a, 2b. Da die Verbindungsstrebe 230 mittels der ersten Befestigungsschrauben 260 direkt mit der Befestigungskonsole 240 verbunden ist, dienen die ersten Befestigungsschrauben 260 als eine Art Drehachse zwischen der Verbindungsstrebe 230 und den Befestigungskonsolen 240. Somit wird eine relative Drehbewegung der Befestigungskonsole 240 in der Verbindungsstrebe 230 ermöglicht.

Da die Befestigungskonsolen 240 aber auch mittels der Schwingungsdämpfungselemente 250 mit der Verbindungsstrebe 230 verbunden sind, wird das Elastomerelement 252 des Schwingungsdämpfungselementes 250 bei einer Veränderung des Winkels zwischen der Verbindungsstrebe 230 und den Tischbeinstrukturen 2a, 2b vorwiegend in Z-Richtung geringfügig elastisch verformt. Denn eine Veränderung des Winkels zwischen der Verbindungsstrebe 230 und den Tischbeinstrukturen 2a, 2b hat eine relative Drehung der Befestigungskonsolen 240 in der Verbindungsstrebe 230 um die durch die Befestigungsschrauben 260 definierten Drehachsen zur Folge, so dass die Schwingungsdämpfungselemente 250 durch die zweiten Befestigungsschrauben 270 beaufschlagt und somit elastisch verformt werden. Das Befestigungselement 254 des Schwingungsdämpfungselementes 250 hat innerhalb der Befestigungskonsole 240 genügend Spiel, um geringe Relativbewegungen zuzulassen. Aufgrund der elastischen Verformung der Elastomerelemente werden laterale Schwingungen des Tischgestells 200 gedämpft, so dass die Schwingungsdauer entsprechend reduziert wird.

### Bezugszeichenliste:

- 2a, 2b: Tischbeinstruktur
- 5a, 5b: Tischplattenbefestigungsstrebe
- 100: Tischgestell
- 130: Verbindungsstrebe
- 140: Befestigungskonsole
- 142: Unterschale der Befestigungskonsole
- 144: Oberschale der Befestigungskonsole
- 145: Schraube
- 150: Schwingungsdämpfungselement, Manschette
- 151: Manschette
- 200: Tischgestell
- 230: Verbindungsstrebe
- 232: Seitenwand (der Verbindungsstrebe)
- 240: Befestigungskonsole
- 242: Seitenwandinnenseite (der Befewtigungskonsole)
- 244: seitliche Öffnung (der Befestigungskonsole)
- 246: Positionierungsöffnung (der Befestigungskonsole)
- 250: Schwingungsdämpfungselement
- 252: Elastomerelement
- 252': Ausnehmung (im Elastomerelement)
- 253: erste Befestigungseinrichtung (des Elastomerelements)
- 254: Befestigungselement
- 255: zweite Verbindungseinrichtung (des Befestigungselements)
- 256: Abstandshalter (des Befestigungselements)
- 257: Vorsprünge (des Befestigungselements)
- 258: Innengewindehülse (des Befestigungselements)
- 259: Vorsprünge (des Elastomerelements)
- 260: erste Befestigungsschraube
- 270: zweite Befestigungsschraube
- 280: Befestigungslasche
- 282: Positionierungsstift (der Befestigungslasche)

## Patentansprüche

1. Möbel in der Form eines Tisches, mit den folgenden Merkmalen:
- das Möbel umfasst ein Tischgestell (100, 200), das zumindest zwei zueinander beabstandete Tischbeinstrukturen (2a, 2b) und mindestens eine die Tischbeinstrukturen (2a, 1b) verbindende Verbindungsstrebe (130, 230) aufweist;
- die Tischbeinstrukturen (2a, 2b) weisen jeweils eine Befestigungskonsole (140, 240) auf oder sind jeweils mit einer Befestigungskonsole (140, 240) verbunden;
- die Verbindungsstrebe (130, 230) ist über die Befestigungskonsolen (140, 240) an den Tischbeinstrukturen (2a, 2b) befestigbar,
**dadurch gekennzeichnet, dass** das Tischgestell (100, 200) eine zwischen der Verbindungsstrebe (130, 230) und mindestens einer Befestigungskonsole (140, 240) wirkende Schwingungsdämpfungseinrichtung zur Dämpfung von seitlichen Schwingungen des Möbels aufweist.

2. Möbel nach Anspruch 1, **gekennzeichnet durch** die folgenden Merkmale:
- die Schwingungsdämpfungseinrichtung umfasst mindestens ein elastisch nachgiebiges Schwingungsdämpfungselement (150, 250), über das die Verbindungsstrebe (130, 230) an mindestens einer Befestigungskonsole (140, 240) befestigbar ist;
- das Schwingungsdämpfungselement (150, 250) wird bei einer Veränderung des Winkels zwischen der Verbindungsstrebe (130, 230) und den Tischbeinstrukturen (2a, 2b) elastisch verformt.

3. Möbel nach Anspruch 2, **dadurch gekennzeichnet, dass** das zumindest eine Schwingungsdämpfungselement (150, 250) an zumindest einem Endbereich der Verbindungsstrebe (130, 230) angeordnet ist.

4. Möbel nach einem der Ansprüche 2 oder 3, **dadurch gekennzeichnet, dass** das zumindest eine Schwingungsdämpfungselement (150) zwischen der Befestigungskonsole (140) und der Verbindungsstrebe (130) angeordnet ist.

5. Möbel nach einem der Ansprüche 2 bis 4, **dadurch gekennzeichnet, dass** das Schwingungsdämpfungselement (150) mittels der Befestigungskonsole (140) klemmbar ist, so dass die Verbindungsstrebe (130) an der Befestigungskonsole (140) über das Schwingungsdämpfungselement (150) befestigbar ist.

6. Möbel nach einem der Ansprüche 2 bis 5, **gekennzeichnet durch** die folgenden Merkmale:
- das Schwingungsdämpfungselement (150) weist die Form einer elastischen Manschette (151) auf; und
- die Manschette (151) erstreckt sich zumindest über den überwiegenden Teil des Überlappungsbereichs von Befestigungskonsole (140) und Verbindungsstrebe (130) über den Endbereich der Verbindungsstrebe (130).

7. Möbel nach einem der Ansprüche 1 bis 3, **dadurch gekennzeichnet, dass** die Verbindungsstrebe (230) zumindest in einem ihrer Endbereiche mit einem in Längsrichtung der Verbindungsstrebe (230) weiter außen angeordneten ersten Befestigungsmittel und einem weiter innen angeordneten zweiten Befestigungsmittel über das Schwingungsdämpfungselement (250) an der Befestigungskonsole (240) befestigbar ist.

8. Möbel nach Anspruch 7, **gekennzeichnet durch** die folgenden Merkmale:
- das Schwingungsdämpfungselement (250) umfasst ein Elastomerelement (252) und ein Befestigungselement (254), das mit dem Elastomerelement (252) verbunden ist;
- das Befestigungselement (254) ist mit der Befestigungskonsole (240) mittelbar über das elastische Elastomerelement (252) verbindbar; und
- die Verbindungsstrebe (230) ist an der Befestigungskonsole (240) über das Befestigungselement (254) befestigbar.

9. Möbel nach Anspruch 8, **gekennzeichnet durch** die folgenden Merkmale:
- das Befestigungselement (254) ist an einer Seitenwandinnenseite (242) der Befestigungskonsole (240) angeordnet;
- das Elastomerelement (252) ist zwischen dem Befestigungselement (254) und der Seitenwandinnenseite (242) der Befestigungskonsole (240) angeordnet;
- der Endbereich der Verbindungsstrebe (230) erstreckt sich über die Befestigungskonsole (240), so dass diese in einem Innenraum des Endbereichs der Verbindungsstrebe (230) angeordnet ist; und
- das zweite Befestigungsmittel ist mit seitlichem Spiel sowohl **durch** eine seitliche Öffnung (231) der Verbindungsstrebe (230) als auch **durch** eine weitere seitliche Öffnung (244) der Befestigungskonsole (240) hindurchgeführt und mit dem Befestigungselement (254) verbunden.

10. Möbel nach Anspruch 9, **gekennzeichnet durch** die folgenden Merkmale:
- das Befestigungselement (254) weist einen Abstandshalter (256) auf, der mit seitlichen Spiel **durch** die seitliche Öffnung (244) der Befestigungskonsole (240) hindurchgeführt ist und über die Befestigungskonsole (240) hinaus hervorsteht; und
- der Abstandshalter (256) liegt von innen an einer Seitenwand (232) der Verbindungsstrebe (230) an.

11. Möbel nach einem der Ansprüche 8 bis 10, **gekennzeichnet durch** die folgenden Merkmale:
- das Elastomerelement (252) weist zumindest eine erste Verbindungseinrichtung (253) auf;
- das Befestigungselement (254) weist zumindest eine zweite Verbindungseinrichtung (255) auf; und
- die erste Verbindungseinrichtung (253) und die zweite Verbindungseinrichtung (255) sind derart gestaltet, dass das Elastomerelement (252) mit dem Befestigungselement (254) über eine Schnappverbindung verbindbar ist.

## Claims

1. Piece of furniture in the form of a table, having the following features:
- the piece of furniture comprises a table frame (100, 200) which has at least two table leg structures (2a, 2b) spaced apart from one another and at least one connecting strut (130, 230) which connects the table leg structures (2a, 1 b);
- the table leg structures (2a, 2b) each have a fastening bracket (140, 240) or are each connected to a fastening bracket (140, 240);
- the connecting strut (130, 230) can be fastened to the table leg structures (2a, 2b) via the fastening brackets (140, 240),
**characterised in that** the table frame (100, 200) has a vibration-damping means for damping lateral vibrations in the piece of furniture, which means acts between the connecting strut (130, 230) and at least one fastening bracket (140, 240).

2. Piece of furniture according to claim 1, **characterised by** the following features:
- the vibration-damping means comprises at least one resiliently flexible vibration-damping element (150, 250), via which the connecting strut (130, 230) can be fastened to at least one fastening bracket (140, 240);
- the vibration-damping element (150, 250) is elastically deformed when the angle between the connecting strut (130, 230) and the table leg structures (2a, 2b) changes.

3. Piece of furniture according to claim 2, **characterised in that** the at least one vibration-damping element (150, 250) is arranged on at least one end region of the connecting strut (130, 230).

4. Piece of furniture according to either claim 2 or claim 3, **characterised in that** the at least one vibration-damping element (150) is arranged between the fastening bracket (140) and the connecting strut (130).

5. Piece of furniture according to any of claims 2 to 4, **characterised in that** the vibration-damping element (150) can be clamped by means of the fastening bracket (140) so that the connecting strut (130) can be fastened to the fastening bracket (140) via the vibration-damping element (150).

6. Piece of furniture according to any of claims 2 to 5, **characterised by** the following features:
- the vibration-damping element (150) is formed as a resilient collar (151); and
- the collar (151) extends over the end region of the connecting strut (130), at least over the main part of the region where the fastening bracket (140) and the connecting strut (130) overlap.

7. Piece of furniture according to any of claims 1 to 3, **characterised in that** the connecting strut (230) can be fastened to the fastening bracket (240), at least in one of its end regions, by means of the vibration-damping element (250), via a first fastener which is arranged further to the outside in the longitudinal direction of the connecting strut (230) and a second fastener which is arranged further to the inside.

8. Piece of furniture according to claim 7, **characterised by** the following features:
- the vibration-damping element (250) comprises an elastomer element (252) and a fastening element (254) which is connected to the elastomer element (252);
- the fastening element (254) can be indirectly connected to the fastening bracket (240) via the resilient elastomer element (252); and
- the connecting strut (230) can be fastened to the fastening bracket (240) via the fastening element (254).

9. Piece of furniture according to claim 8, **characterised by** the following features:
- the fastening element (254) is arranged on the inner side (242) of a side wall of the fastening bracket (240);
- the elastomer element (252) is arranged between the fastening element (254) and the inner side (242) of the side wall of the fastening bracket (240);
- the end region of the connecting strut (230) extends over the fastening bracket (240) so that said fastening bracket is arranged in an inner space of the end region of the connecting strut (230); and
- the second fastener is guided with lateral play through both a lateral opening (231) in the connecting strut (230) and a further lateral opening (244) in the fastening bracket (240) and is connected to the fastening element (254).

10. Piece of furniture according to claim 9, **characterised by** the following features:
- the fastening element (254) has a spacer (256) which is guided with lateral play through the lateral opening (244) in the fastening bracket (240) and projects beyond the fastening bracket (240); and
- the spacer (256) abuts a side wall (232) of the connecting strut (230) from the inside.

11. Piece of furniture according to any of claims 8 to 10, **characterised by** the following features:
- the elastomer element (252) has at least one first connector (253);
- the fastening element (254) has at least one second connector (255); and
- the first connector (253) and the second connector (255) are configured such that the elastomer element (252) can be connected to the fastening element (254) via a snap connection.

## Revendications

1. Meuble sous la forme d'une table, comprenant les éléments techniques suivants :
- le meuble comprend un piètement de table (100, 200) qui comprend au moins deux structures formant pied de table (2a, 2b) écartées l'une de l'autre et au moins une entretoise de liaison (130, 230) qui relie les structures formant pied de table (2a, 1b) ;
- les structures formant pied de table (2a, 2b) comprennent chacune une console de fixation (140, 240) ou sont respectivement reliées à une console de fixation (140, 240) ;
- l'entretoise de liaison (130, 230) est susceptible d'être fixée aux structures formant pied de table (2a, 2b) via les consoles de fixation (140, 240),
**caractérisé en ce que** le piètement de table (100, 200) comprend un dispositif d'amortissement d'oscillation, agissant entre l'entretoise de liaison (130, 230) et l'une au moins des consoles de fixation (140, 240), pour l'amortissement d'oscillations latérales du meuble.

2. Meuble selon la revendication 1, **caractérisé par** les caractéristiques suivantes :
- le dispositif d'amortissement d'oscillation comprend au moins un élément d'amortissement d'oscillation élastiquement flexible (150, 250), via lequel l'entretoise de liaison (130, 230) peut être fixée à l'une au moins des consoles de fixation (140, 240) ;
- l'élément d'amortissement d'oscillation (150, 250) est élastiquement déformé lors d'une modification de l'angle entre l'entretoise de liaison (130, 230) et les structures formant pied de table (2a, 2b).

3. Meuble selon la revendication 2, **caractérisé en ce que** ledit au moins un élément d'amortissement d'oscillation (150, 250) est agencé à au moins une zone terminale de l'entretoise de liaison (130, 230).

4. Meuble selon l'une des revendications 2 ou 3, **caractérisé en ce que** ledit au moins un élément d'amortissement d'oscillation (150) est agencé entre la console de fixation (140) et l'entretoise de liaison (130).

5. Meuble selon l'une des revendications 2 à 4, **caractérisé en ce que** l'élément d'amortissement d'oscillation (150) est susceptible d'être coincé au moyen de la console de fixation (140), de telle sorte que l'entretoise de liaison (130) peut être fixé à la console de fixation (140) via l'élément d'amortissement d'oscillation (150).

6. Meuble selon l'une des revendications 2 à 5, **caractérisé par** les caractéristiques suivantes :
- l'élément d'amortissement d'oscillation (150) présente la forme d'une manchette élastique (151) ; et
- la manchette (151) s'étend au moins sur la majeure partie de la zone de chevauchement de la console de fixation (140) et de l'entretoise de liaison (130) au-dessus de la zone terminale de l'entretoise de liaison (130).

7. Meuble selon l'une des revendications 1 à 3, **caractérisé en ce que** l'entretoise de liaison (230) et susceptible d'être fixée à la console de fixation (240), au moins dans l'une de ses zones terminales, avec un premier moyen de fixation agencé plus loin à l'extérieur en direction longitudinale de l'entretoise de fixation (230) et avec un second moyen de fixation agencé plus loin à l'intérieur, via l'élément d'amortissement d'oscillation (250).

8. Meuble selon la revendication 7, **caractérisé par** les caractéristiques suivantes :
- l'élément d'amortissement d'oscillation (250) inclut un élément élastomère (252) et un élément de fixation (254), qui est relié avec l'élément élastomère (252) ;
- l'élément de fixation (254) est susceptible d'être relié avec la console de fixation (240) indirectement via l'élément élastomère élastique (252) ; et
- l'entretoise de liaison (230) et susceptible d'être fixée à la console de fixation (240) via l'élément de fixation (254).

9. Meuble selon la revendication 8, **caractérisé par** les caractéristiques suivantes :
- l'élément de fixation (254) est agencé sur un côté intérieur (242) d'une paroi latérale de la console de fixation (240) ;
- l'élément élastomère (252) est agencé entre l'élément de fixation (254) et le côté intérieur (242) de la paroi latérale de la console de fixation (240) ;
- la zone terminale de l'entretoise de liaison (230) s'étend au-dessus de la console de fixation (240), de sorte que celle-ci est agencée dans un volume intérieur de la zone terminale de l'entretoise de liaison (230) ; et
- le second moyen de fixation est passé, avec jeu latéral, aussi bien à travers une ouverture latérale (231) de l'entretoise de liaison (230) qu'à travers une autre ouverture latérale (244) de la console de fixation (240), et est relié à l'élément de fixation (254).

10. Meuble selon la revendication 9, **caractérisé par** les caractéristiques suivantes :
- l'élément de fixation (254) comprend un élément de maintien d'écartement (256), qui est passé avec jeu latéral à travers l'ouverture latérale (244) de la console de fixation (240) et qui dépasse au-delà de la console de fixation (240) ; et
- l'élément de maintien d'écartement (256) est appliqué depuis l'intérieur contre une paroi latérale (232) de l'entretoise de liaison (230).

11. Meuble selon l'une des revendications 8 à 10, **caractérisé par** les caractéristiques suivantes :
- l'élément élastomère (252) comprend au moins un premier dispositif de liaison (253) ;
- l'élément de fixation (254) comprend au moins un second dispositif de liaison (255) ; et
- le premier dispositif de liaison (253) et le second dispositif de liaison (255) sont conçus de telle manière que l'élément élastomère (252) est susceptible d'être relié à l'élément de fixation (254) via une liaison à encliquetage.
